# EUROPEAN PATENT SPECIFICATION

(11) **EP 2 285 033 B1**
(45) Date of publication and mention of the grant of the patent: **03.10.2012**
(21) Application number: 09360040.1
(22) Date of filing: 13.08.2009
(51) Int. Cl.: H04L 1/18, H04L 1/00, H04W 52/04

(54) **Modification of data transmission regime**
Modifizierung von Datenübertragungsregime
Modification d'un régime de transmission de données

(43) Date of publication of application: 16.02.2011
(73) Proprietor: Alcatel Lucent, 75007 Paris (FR)
(72) Inventor: Wong, Shin Horng, Chippenham, Wiltshire SN14 0SP (GB)
(74) Representative: Sarup, David Alexander

(56) References cited:
- EP-A1- 1 727 317
- WO-A2-2007/125462

## Description

### FIELD OF THE INVENTION

The present invention relates to a method of modifying a data packet transmission regime in a wireless telecommunications network in response to a triggering event, user equipment, a base station and a computer program product.

### BACKGROUND

Wireless telecommunications systems are known. In those known systems, radio coverage is provided to user equipment, for example, mobile telephones, by regions of geographical area. The required radio coverage in each geographical area may be provided by means of a radio coverage network which may comprise one or more base stations. User equipment located in a geographical area served by a base station receives information and data from the base station and transmits data and information to the base station.

In a high speed uplink packet access (HSUPA) telecommunications network, data and information is sent between user equipment and a base station in data packets on a radio frequency carrier.

Packets of data are sent in time blocks of predetermined length. In known wireless telecommunications systems, the available time blocks in a HSUPA network have a length of 10ms or 2ms. Those time blocks are known as data block transmit time intervals (TTI).

It will be understood that successfully sending a block of data of a given size in a shorter time block (TTI) enables more data to be sent over a given period. However, in order to successfully send a block of data of a given size in a shorter time block, it is necessary to ensure that a radio link is capable of supporting successful data transfer, for example, if may be necessary to ensure signal to noise and interference ratio (SNIR) on the radio frequency carrier is sufficient. In order to achieve a sufficient SNIR, telecommunications equipment (ie a base station or an item of user equipment) will typically need to transmit the data packet on a radio carrier at a higher power for a 2ms transmit time interval than for a 10ms transmit time interval.

Transmission power available to a base station or user equipment may be limited, for example, to ensure signals are sent at a power level deemed safe for operation, or because a limited amount of power is available from a power source.

It will therefore be understood that, in a power limited user equipment to base station data transmission scenario, transfer of transport blocks of a given size over a shorter time period (ie operating in a 2ms TTI regime rather than a 10ms TTI regime) may result in a smaller geographical area being adequately supported by radio coverage. Thus, although a 2ms transmit time interval regime can result in higher total data throughput, adequately supporting such a regime may require the provision of more base stations to cover a given geographical area.

When a power limit is reached, it may be possible for an interaction between user equipment and a base station to be transferred back to a longer transmit time interval regime. Transferring back to a 10ms transmit time interval from a 2ms transmit time interval regime has the advantage that, for a given transport block size, a lower SNIR is required. The required signal to noise and interference ratio is likely to be achievable within the power limitations of the wireless telecommuni cations system, and the interaction between user equipment and a base station may no longer be operating at the limit of available power. Such an arrangement allows a base station to maintain a larger coverage area, but has the potential disadvantage that outside the area in which 2ms transmit time interval data transmission is available, a user will be forced to operate at the lower data throughput rate offered by a 10ms transmit time interval regime.

W02007/125462 A2 describes a method and apparatus for controlling energy expansion of sensor network nodes having limited power energy and communication capacity in a wireless sensor network to prolong the life of the sensor network.

The method described comprises the steps of acquiring energy information indicative of energy status of a node in the network then adjusting one or more data transmission parameters based on the acquired energy information.

Accordingly, it is desired to provide a modified data transmission regime.

### SUMMARY

A first aspect provides a method of modifying a data packet transmission regime in a wireless telecommunications network in response to a triggering event,
the data packet transmission regime comprising:
transmitting a data packet of a predetermined size, over a fixed transmit time interval, at a variable transmission power level;
monitoring for acknowledgement of successful receipt of the data packet; and re-transmitting the data packet if no acknowledgement of successful receipt has been received after a predetermined monitoring period has elapsed,
receiving details of the triggering event, the triggering event comprising receipt of a request to increase the variable transmission power level beyond a predetermined power threshold;
transmitting trigger information indicating an occurrence of the triggering event;
receiving a modification signal instructing a decrease in said predetermined monitoring period of said data transmission regime, said modification signal being generated in response to the triggering information; and modifying the data packet transmission regime by decreasing the predetermined monitoring period in accordance with the received modification signal.

The first aspect recognises that utilising a data transmission regime in which an acknowledgement protocol is operating enables transmission of redundant data packets, or transport blocks of data to be minimised. If a data packet is successfully received and an acknowledgement of successful receipt is received, there is no need to re-send that data packet.

A method in accordance with the first aspect recognises that repeating transmission of a data packet without knowledge of whether is has successfully reached its destination leads to transmission of redundant data packets and does not optimise overall data throughput in a wireless telecommunications network. It will be appreciated that receipt of a negative acknowledgement, i.e. an indication that the data packet was unsuccessfully received is also considered to be no acknowledgement of successful receipt of a data packet.

The first aspect further recognises that receiving a request to increase the variable transmission power level beyond a predetermined power threshold can act as a reasonable triggering event. If a request for an increase in power is received, the original operating data transmission regime is not adequately meeting wireless telecommunication network operating targets in some way. If no further power is available for transmission, a different method for attempting to meet operating targets is required.

Modifying the data packet transmission regime by decreasing the predetermined monitoring period effectively increases the number of retransmissions of a particular data packet. Increasing the number of transmissions, and in particular, retransmitting a particular data packet more often over a particular time period, is likely to result in an improvement to the likelihood that the data packet will be successfully received in that particular time period.

Repeating transmission of a particular data packet over a period of time increases processing gain of the data packet and can thereby increase coverage area offered in a base station - user equipment interaction in such a wireless telecommunications network.

In one embodiment, the method further comprises the step of decreasing the transmission power level of the data transmission regime in accordance with the received modification signal.

Accordingly, compared to a method in which power transmission is not reduced, it is less likely that the modified data transmission regime will cause interference with other transmissions occurring across the wireless telecommunications network.

Furthermore, since the trigger event indicates that the original data transmission regime was operating near a predetermined power threshold, decreasing the power of transmissions is likely to have the effect of increasing coverage area.

In one embodiment, the modifying step further comprises the steps of:
determining for the unmodified data transmission regime, an unmodified power offset;
determining from the modification signal, a modified power offset; and
generating a new overall power offset by summing the unmodified power offset and the modified power offset.

In a user equipment-base station interaction in a wireless telecommunications network user equipment is typically sent signals relating to power offset as opposed to absolute power values. It can therefore be understood that a modification signal relating to reduction of power can be expressed as a change in power offset.

It will be appreciated that the modification signal may comprise data obtained from a predetermined or pre-mapped look-up table. That table may contain data relating to appropriate reductions in monitoring period and/or power offset values for a data packet of predetermined size.

In one embodiment, the modifying step further comprises the steps of:
determining for the unmodified data transmission regime, a target number of total transmissions of the data packet;
generating a target elapsed time period for the data packet to be successfully received after first transmission of the data packet, by multiplying the target number of total transmission by the unmodified predetermined monitoring period;
calculating a target number of total transmissions in the modified regime that will fit into the generated target elapsed time by dividing the generated target elapsed time by the modified reduced predetermined monitoring period.

In a wireless telecommunications network, data relating to various applications is sent from user equipment to a base station and vice versa. It may not be as important to receive all of the packets of data in a simple FTP process quickly as to receive all of the packets of data relating to a voice or video call. A data transmission regime therefore sets a target successful transmission time for a data packet of specific packet size to ensure a user experiences an acceptable quality of service. The target successful transmission time for a specific packet size is also known as Quality of Service (QoS). By considering the quality of service experienced by a user and by targeting the same quality of service in the modified data transmission regime as in the original data transmission regime, it will be understood that compared to a situation in which the data regime is not modified in response to the triggering event, it is more likely that the desired quality of service for a given data packet type will be achieved.

In one embodiment, the data transmission regime further comprises the steps of monitoring for acknowledgement of partial receipt of the data packet; and retransmitting a modified version of the data packet in response to the acknowledgement of partial receipt of the data packet.

Accordingly, the first aspect may utilise various means for obtaining processing gain by retransmitting a data packet more frequently than in an unmodified data transmission regime. It will be understood that any partially successfully received data packets may be subjected to a chase combining method or an incremental redundancy method. As a result it may be possible to achieve completely successful receipt of a data packet in a shorter time period, thus requiring fewer retransmissions of any given data packet.

In one embodiment, the modification signal generated in response to the triggering information comprises an indication of a number of supportable independent consecutive simultaneous acknowledgement processes; and
the step of modifying further comprises a step of calculating a modified predetermined monitoring period by multiplying the indication of a number of supportable simultaneous acknowledgement processes by the fixed transmit time interval; and modifying the data packet transmission regime by setting the predetermined monitoring period in accordance with the calculated modified predetermined monitoring period.

It will be appreciated that a reduced predetermined monitoring period may be calculated from a signal relating to other characteristic of the data transmission regime, such as am indication of a number of supportable simultaneous acknowledgement processes.

In one embodiment, said fixed transmit time interval is 2ms or 10ms. Accordingly, it will be understood that the first aspect is particularly useful with respect to known used transmit time intervals in wireless telecommunications networks.

In one embodiment, the unmodified predetermined monitoring period is 16ms or 40ms. It will be appreciated that a standard predetermined monitoring period may be employed in the unmodified data transmission regime.

In one embodiment, the data packet transmission regime comprises a regime for transmitting data packets from user equipment to a base station.

In one embodiment, the data packet transmission regime comprises a regime for transmitting data packets from a base station to user equipment.

In one embodiment, the step of transmitting trigger information relating to the triggering event comprises a step of transmitting trigger information to the base station, and wherein the step of receiving a modification signal generated in response to the triggering information comprises a step of receiving the modification signal from the base station.

A second aspect provides a computer program product, operable when executed on a computer, to perform the method steps of the first aspect.

A third aspect provides user equipment operable to modify a data packet transmission regime in a wireless telecommunications network in response to a triggering event, said user equipment comprising:
transmission logic operable to transmit a data packet of a predetermined size, over a fixed transmit time interval, at a variable transmission power level;
monitoring logic operable to monitor for acknowledgement of successful receipt of said data packet; and
retransmission logic operable to retransmit said data packet if no acknowledgement of successful receipt has been received after a predetermined monitoring period has elapsed, reception logic operable to receive details of said triggering event, said triggering event comprising receipt of a request to increase said variable transmission power level beyond a predetermined power threshold;
trigger transmission logic operable to transmit trigger information indicating an occurrence of said triggering event;
modification reception logic operable to receive a modification signal instructing a decrease in said predetermined monitoring period of said data transmission regime, said modification signal being generated in response to said triggering information; and modification logic operable to modify said data packet transmission regime by decreasing said predetermined monitoring period in accordance with said received modification signal.

It will be appreciated that the method of the first aspect has particular advantages when implemented in user equipment for use in a wireless telecommunications network. In particular, it will be appreciated that user equipment operable to perform the method steps of the first aspect may be operable to achieve a greater geographical coverage, whilst maintaining performance and overall data throughput in interactions with a suitable base station.

In one embodiment, the modification logic is further operable to decrease the transmission power level of the data transmission regime in accordance with the received modification signal.

In one embodiment, the modification logic is further operable to:
determine for the unmodified data transmission regime, an unmodified power offset;
determine from the modification signal, a modified power offset; and
generate a new overall power offset by summing the unmodified power offset and the modified power offset.

In one embodiment, the modifying logic is further operable to:
determine for the unmodified data transmission regime, a target number of total transmissions of the data packet;
generate a target elapsed time period for the data packet to be successfully received after first transmission of the data packet, by multiplying the target number of total transmission by the unmodified predetermined monitoring period;
calculate a target number of total transmissions in the modified regime that will fit into the generated target elapsed time by dividing the generated target elapsed time by the modified reduced predetermined monitoring period.

In one embodiment, the monitoring logic is further operable to monitor for acknowledgement of partial receipt of the data packet; and the transmission logic is further operable to retransmit a modified version of the data packet in response to the acknowledgement of partial receipt of the data packet.

In one embodiment, the modification signal generated in response to the triggering information comprises an indication of a number of supportable simultaneous acknowledgement processes; and the modifying step further comprises a step of calculating a modified predetermined monitoring period by multiplying the indication of a number of supportable simultaneous acknowledgement processes by the fixed transmit time interval; and modifying the data packet transmission regime by setting the predetermined monitoring period in accordance with the calculated modified predetermined monitoring period.

In one embodiment, the fixed transmit time interval is 2ms or 10ms.

In one embodiment, the unmodified predetermined monitoring period is 16ms or 40ms.

In one embodiment, the data packet transmission regime comprises a regime for transmitting data packets from the user equipment to a base station.

In one embodiment, the step of transmitting trigger information relating to the triggering event comprises: a step of transmitting trigger information to the base station, and wherein the step of receiving a modification signal generated in response to the triggering information comprises a step of receiving the modification signal from the base station.

A fourth aspect provides a base station operable to modify a data packet transmission regime in a wireless telecommunications network in response to a triggering event, said base station comprising:
transmission logic operable to transmit a data packet of a predetermined size, over a fixed transmit time interval, at a variable transmission power level;
monitoring logic operable to monitor for acknowledgement of successful receipt of said data packet; and
retransmission logic operable to retransmit said data packet if no acknowledgeme nt of successful receipt has been received after a predetermined monitoring period has elapsed, reception logic operable to receive details of said triggering event, said triggering event comprising receipt of a request to increase said variable transmission power level beyond a predetermined power threshold;
trigger transmission logic operable to transmit trigger information indicating an occurrence of said triggering event;
modification reception logic operable to receive a modification signal instructing a decrease in said predetermined monitoring period of said data transmission regime, said modification signal being generated in response to said triggering information; and modification logic operable to modify said data packet transmission regime by decreasing said predetermined monitoring period in accordance with said received modification signal.

It will be appreciated that the method of the first aspect may also be implemented by a base station for use in a wireless telecommunications system. A base station may also be power limited and thus may also achieve greater coverage by modifying a data transmission regime having a fixed TTI by employing a modification according to the method of the first aspect.

In one embodiment, the modification logic is further operable to decrease the transmission power level of the data transmission regime in accordance with the received modification signal.

In one embodiment, the modification logic is further operable to:
determine for the unmodified data transmission regime, an unmodified power offset;
determine from the modification signal, a modified power offset; and
generate a new overall power offset by summing the unmodified power offset and the modified power offset.

In one embodiment, the modifying logic is further operable to:
determine for the unmodified data transmission regime, a target number of total transmissions of the data packet:
generate a target elapsed time period for the data packet to be successfully received after first transmission of the data packet, by multiplying the target number of total transmission by the unmodified predetermined monitoring period;
calculate a target number of total transmissions in the modified regime that will fit into the generated target elapsed time by dividing the generated target elapsed time by the modified reduced predetermined monitoring period.

In one embodiment, the monitoring logic is further operable to monitor for acknowledgement of partial receipt of the data packet; and the transmission logic is further operable to retransmit a modified version of the data packet in response to the acknowledgement of partial receipt of the data packet.

In one embodiment, the modification signal generated in response to the triggering information comprises an indication of a number of supportable simultaneous acknowledgement processes; and the modifying step further comprises a step of calculating a modified predetermined monitoring period by multiplying the indication of a number of supportable simultaneous acknowledgement processes by the fixed transmit time interval; and modifying the data packet transmission regime by setting the predetermined monitoring period in accordance with the calculated modified predetermined monitoring period.

In one embodiment, the fixed transmit time interval is 2ms or 10ms.

In one embodiment, the unmodified predetermined monitoring period is 16ms or 40ms.

Further particular and preferred aspects of the present invention are set out in the accompanying independent and dependent claims. Features of the dependent claims may be combined with features of the independent claims as appropriate and in combinations other than those explicitly set out in the claims.

### BRIEF DESCRIPTION OF THE DRAWINGS

Embodiments of the present invention will now be described further, with reference to the drawings in which:
Figure 1 illustrates the main components of a telecommunications network according to one embodiment;
Figure 2 illustrates schematically a data transmission acknowledgement protocol;
Figure 3 illustrates schematically a data transmission regime using the data transmission acknowledgement protocol of Figure 2;
Figure 4 illustrates a modification of a data transmission regime according to one embodiment;
Figure 5 illustrates a modification of a data transmission regime according to a second embodiment;
Figure 6 illustrates schematically the main processing steps of one embodiment; and
Figure 7 illustrates schematically user equipment operable to perform a method according to one embodiment.

### DESCRIPTION OF THE EMBODIMENTS

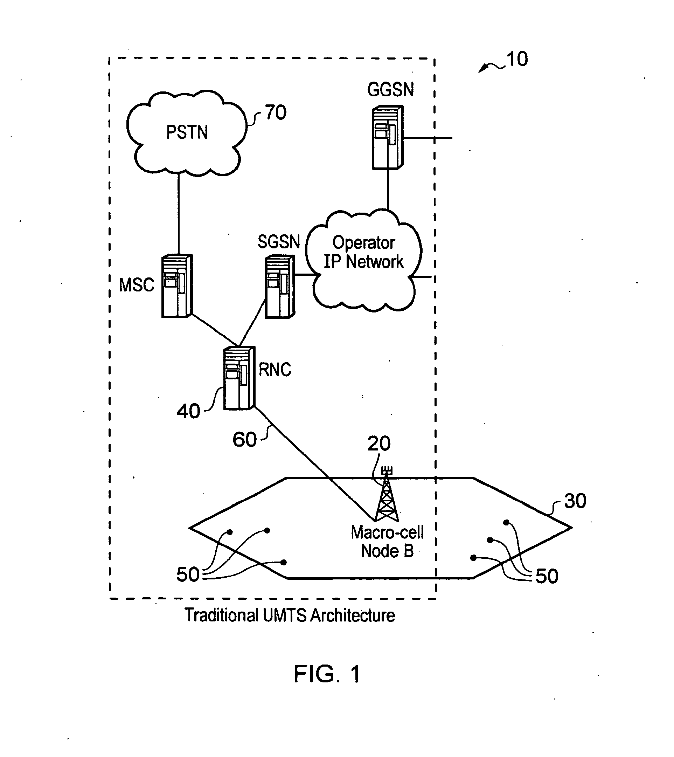

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station and thus effectively manages the entire wireless communications system.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resource to user equipment in a manner that aims to optimise operation of the wireless telecommunications network 10.

In a high speed uplink packet access (HSUPA) telecommunications network, data and information is sent between user equipment and a base station in data packets on a radio frequency carrier.

Packets of data are sent in time blocks of predetermined length. In known wireless telecommunications systems, the available time blocks have a length of 10ms or 2ms. Those time blocks are known as data block transmit time intervals (TTI).

It will be understood that successfully sending a block of data of a given size in a shorter time block (TTI) enables more data to be sent over a given period. However, in order to successfully send a block of data of a given size in a shorter time block, it is necessary to ensure that signal to noise and interference ratio (SNIR) on the radio frequency carrier is sufficient. In order to achieve a sufficient SNIR, telecommunications equipment (i.e. a base station or an item of user equipment) will typically need to transmit the data packet on a radio carrier at a higher power for a 2ms transmit time interval than for a 10ms transmit time interval.

Transmission power available to a base station or user equipment may be limited, for example, to ensure signals are sent at a power level deemed safe for operation, or because a limited amount of power is available form a power source.

It will therefore be understood that, in a power limited user equipment - base station data transmission scenario, transfer of transport blocks of a given size over a shorter time period (i.e. operating in a 2ms TTI regime rather than a 10ms TTI regime) may result in a smaller geographical area being adequately supported by radio coverage. Thus, although a 2ms transmit time interval regime can result in higher total data throughput, adequately supporting such a regime may require the provision of more base stations to cover a given geographical area.

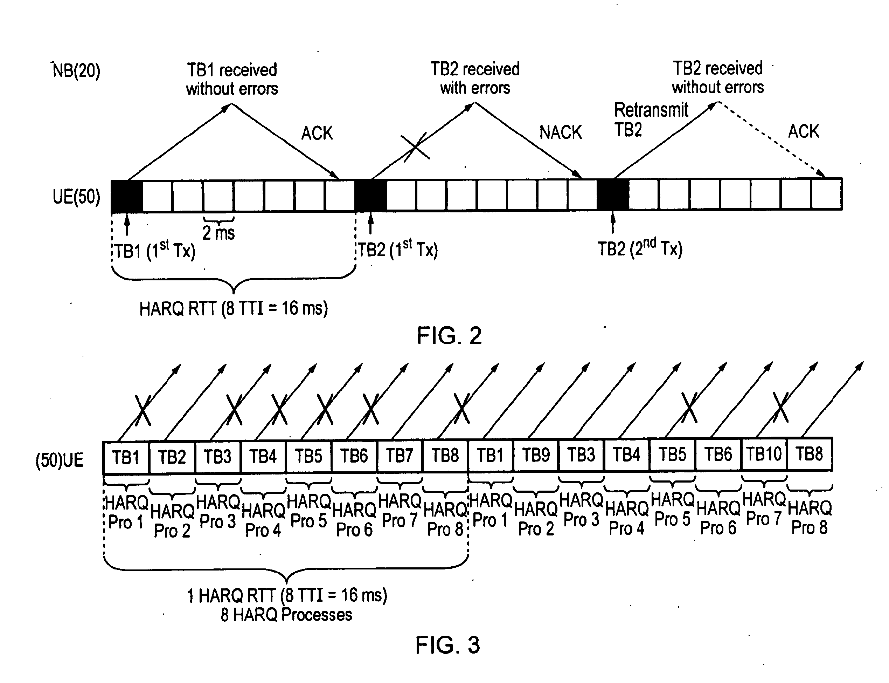

Figure 2 illustrates schematically a data transmission acknowledgement protocol used in a data transmission regime of a telecommunications network 10. In particular, Figure 2 illustrates schematically transmission of a transport block in a data packet from user equipment 50 to a base station 20 in a HSUPA network operating in a 2ms TTI regime and the operation of an acknowledgement protocol known as a Hybrid Automatic Repeat Request (HARQ). HARQ enables fast acknowledgement and consequently fast retransmission of a data packet if required. In Figure 2, a first data packet TB 1 is transmitted from user equipment and successfully received by base station 20. The base station, in accordance with the HARQ process, sends an acknowledgement of safe receipt (ACK) of TB1 back to user equipment 50. Figure 2 illustrates a "stop and wait" HARQ protocol in which user equipment waits for acknowledgement of safe receipt of a data packet before sending the next. Since a successful receipt is received in respect of TB1, within a pre-programmed monitoring period, user equipment can transmit a second data packet, TB2. The monitoring period in the case shown in Figure 2 is 8 transmit time intervals, i.e. 16ms.

TB2 is not successfully received at base station 20 and thus the base station generates and sends a negative acknowledgement (NACK). After waiting the pre-programmed monitoring period and having received a NACK, user equipment retransmits TB2, which is then received successfully by the base station.

Figure 3 illustrates schematically a data transmission regime using the data transmission acknowledgement protocol of Figure 2. In a HSUPA telecommunications network a synchronous HARQ protocol is used. In such a case, retransmission of a given data packet is expected after a pre-programmed monitoring period. That pre-programmed monitoring period is the time between commencement of two transmissions of the same packet of data and has been set in accordance with a reasonable estimate of operative HARQ round trip time. The estimate of HARQ round trip time for 2ms TTI and predetermined monitoring period for the 2ms TTI regime has been set at 8TTI (16ms).

Whilst waiting for an ACK or NACK from a base station in respect of a given data packet, user equipment can transmit further data packets. The base station can also monitor for successful receipt or otherwise of those data packets and it will thus be understood that there are, at most, 8 simultaneous HARQ processes occurring at any given time.

A data transmission regime using a monitoring period of 16ms is shown. In the case illustrated, eight data packets, labelled as TB1 to TB8 are consecutively transmitted by user equipment, one in each 2ms TTI. Each data packet is subject to a HARQ process, labelled as "HARQ Pro1" to "HARQ Pro8". As shown, TB1, TB3, TB4, TB5, TB6 and TB8 are not successfully received by the base station 20 and they are retransmitted in the next sequence of 8 transmitted data packets in the TTI's shown. Since TB2 and TB7, transmitted in HARQ Pro2 and HARQ Pro7 respectively, are successfully received and acknowledged by base station 20, in the next sequence of 8 transmitted data packets two new data packets TB9 and TB10 respectively, can be transmitted on HARQ Pro 2 and HARQ Pro7.

For a given application (for example, voice data, video data or an FTP process) user equipment 50 and base station 20 are aware, via a look up table, that successful reception of a transmitted data packet of a particular size within a target elapsed time period after first transmission will result in a good service experience by a user. That target elapsed time period will depend upon the application being offered. The target elapsed time period for video or voice, for example, will typically be significantly shorter than the target elapsed time for a data packet relating to a SMS message. The target elapsed time period for a data packet of a given size for a given size of data packet is referred to as "Quality of Service".

User equipment 50 and base station 20 may each have a look up table, giving an initial starting set of parameters within which user equipment 50 can operate for transmission of a data packet, or transport block, of given size for a given application. That look up table is known as a HARQ profile. The HARQ profile specifies a power offset and a number of maximum transmissions (including a first transmission) for a data packet of given size, for a particular application, requiring a particular Quality of Service.

Use of the HARQ protocol in combination with a Quality of Service target allows calculation of some indication of whether user equipment and base station are operating to offer an acceptable level of service to an end user.

It will be understood that to meet a Quality of Service target, each data packet has a target number of retransmissions. The maximum number of transmissions includes the first transmission and all subsequent retransmissions of the same data packet. If a data packet transmitted by user equipment is not successfully received by a base station after the maximum number of transmissions has been made, it is deemed to have failed and a higher level retransmission at the Radio Link Control level is performed. RLC retransmission is slow and thus undesirable. In practical terms, if a data transmission between user equipment and a base station is not meeting a required quality of service, the base station indicates to user equipment that it needs to increase the power at which it is transmitting those data packets. It will be understood that increasing the power of transmission of a data packet increases the SNIR and thus increases the chances that data packet will be successfully received by a base station within the Quality of Service target time.

For a data packet of a particular size, the larger the number of transmissions allowed by the HARQ Profile, the lower the transmit power required from user equipment when transmitting that data packet. It will be understood that, as a result of the HARQ protocol employed, a base station will be able to terminate retransmission of a data packet if the data packet is successfully received by the base station before the maximum number of transmissions set in the HARQ profile is reached. Early termination of that process results in user equipment achieving a higher total data throughput.

A Retransmission Sequence Number (RSN) is used to monitor how often a given data packet is transmitted. As described above, a radio carrier comprises a plurality of channels. A channel upon which data packets are sent from user equipment to a base station relating to user equipment applications (for example, voice, video, SMS) are sent is known as an E-DCH Dedicated Physical Data Channel (E-DPDCH). A channel upon which control information relating to the user equipment is sent is known as an E-DCH Dedicated Physical Control Channel (E-DPCCH). The RSN is sent on the E-DPCCH channel together with the data packet sent on the data channel. A known specification for HSUPA networks allows 2 bits for the RSN. However, the maximum number of transmissions is not limited to 4. Nonetheless, this is not a hindrance, since the RSN does not need to increase for transmissions beyond 4. Furthermore, the existing HARQ profile table allows up to 16 transmissions to meet a particular Quality of Service.

It has been recognised that in a power limited scenario, user equipment and base stations may be unable to meet a given Quality of Service target time by simply increasing power of transmission as described above. If a Quality of Service target is not being met, a message may be sent to up the power of transmission, and if a power threshold has been met, there may be no further power available.

It has been recognised that it is possible to employ the HARQ protocol in a modified data transmission regime in such a power limited situation, such that the number of redundant data packets transmitted is minimised and such that the target time required to achieve a given Quality of Service may still be met.

In known systems utilising the HARQ protocol, as described above, retransmission of a given data packet is expected after a pre-programmed monitoring period. That pre-programmed monitoring period is the time between commencement of two transmissions of the same packet of data and has been fixed in accordance with a reasonable estimate of operative HARQ round trip time. The estimate of HARQ round trip time for 2ms TTI and predetermined monitoring period for the 2ms TTI regime has been set at a fixed 8TTI (16ms).

It has been recognised that if the pre-programmed monitoring period is reduced, it is possible to fit more transmission of a given data packet into a Quality of Service target time. This may result in a data packet being successfully received within the Quality of Service target time and thus the Quality of Service being met. Furthermore, repetition of a data packet, as allowed by a greater number of retransmissions, increases the processing gain of a data packet (for example, by chase combining or by incremental redundancy) and thus increases coverage of a base station-user equipment interaction.

It will be understood that it is possible for user equipment or a base station to conduct more transmissions of a data packet under this modified transmission regime at full, or close to full, power. That may, however, cause interference to other users. It has been recognised that decreasing the monitoring period and thus allowing for a greater number of transmissions also allows the transmit power required to send a given data packet to be lowered, thereby further increasing the coverage offered by a base station-user equipment interaction.

In one embodiment, user equipment 20 is transmitting packets of data to a base station 20 in a 2ms TTI data transmission regime. User equipment operates as described in relation to Figures 2 and 3, aiming to meet a known Quality of Service. If user equipment 50 indicates to a base station that it has reached a predetermined power threshold, base station 20 is operable to send a signal (for example via HS-SCCH) to user equipment 50, instructing that user equipment to reduce the number of simultaneous ongoing HARQ processes from the standard 8 in the 2ms TTI regime to a lower number, for example, 6, 5, 4 or 3. As a result, the user equipment can calculate that the monitoring period for acknowledgement of successful receipt of said data packet, and the retransmission wait for a data packet is reduced.

Since the user equipment was operating to a known Quality of Service target successful transmission time before it reached a power limit trigger event, the user equipment can calculate how many transmissions it is allowed under the new regime whilst still aiming to meet the same Quality of Service target successful transmission time.

In this embodiment, the base station 20 is also operable to send a power offset to user equipment 50. User equipment 50 applies that power offset in addition to the power offset specified by the HARQ profile look up table, when transmitting data packets of an uplink data channel.

In one embodiment, the base station will be operable to complete a HARQ protocol for a data packet and return an ACK or a NACK before the time slot allocated by user equipment 20 for retransmission of that data packet. It may, however, be possible that an older base station will not capable of processing the HARQ request quickly enough to meet that target. In that instance, the base station may only reduce the nu mber of simultaneous HARQ processes (and thus ACK/NACK receipt monitoring period) to a time period which the base station can handle. Alternatively, a base station can choose not to acknowledge specific data packet transmissions, for example alternate data packet transmissions in a sequence. In this case, a base station can may particular use of a store and process capability. Data packets received, even unsuccessfully can be combined (by chase or incremental redundancy). At the user equipment, an unacknowledged data packet will be assumed to have failed to be successfully received when the reduced monitoring period expires. As a result, the user equipment retransmits that data packet in the next HARQ process assigned to that data packet.

Use of a modified data transmission scheme as described above allows use of incremental redundancy which offers higher gain than simple pure repetition of transmission of a data packet. Furthermore, use of the HARQ process minimises transmission of unnecessary data packets. Since the HARQ process demands retransmission of a data packet in a spaced TTI, use of the HARQ protocol allows time diversity to be leveraged, which is particularly useful in a high Doppler environment. As a result of these factors, a data packet of a predetermined size can have a larger overall throughput, due to early termination enabled by the HARQ protocol and/or processing gain if, for example, it is transmitted via 5 HARQ transmissions in a 2ms TTI regime compared to transmission of that same data packet in one transmission in a 10ms TTI regime, even though both have the same overall transmission time.

It will therefore be understood that implementation of a modified data transmission 2ms TTI regime as described herein can allow for: an increase in geographical coverage, a maintenance of Quality of Service and an increase of data throughput compared to simply transferring to a 10ms TTI regime.

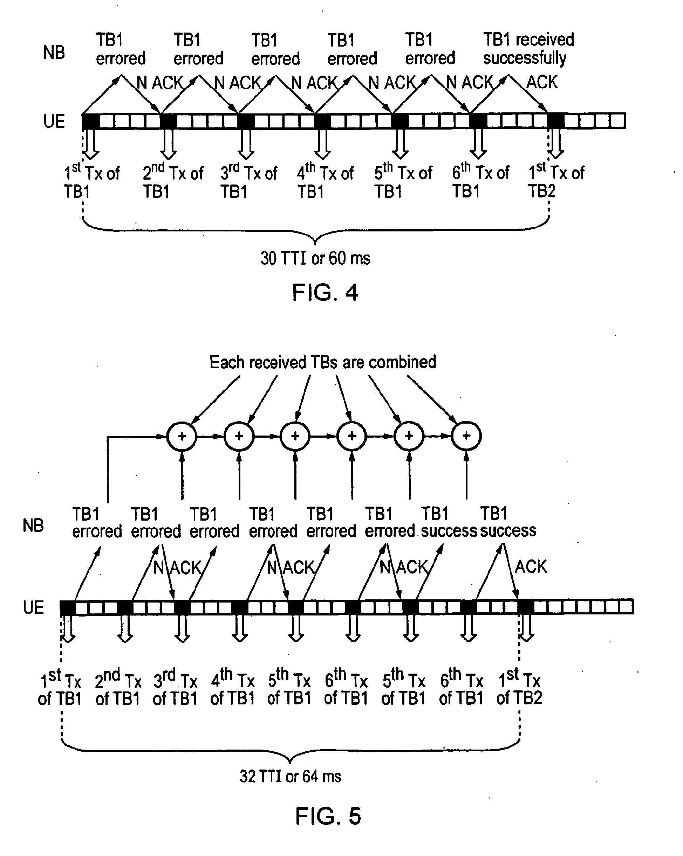

Figure 4 illustrates schematically a modification of a data transmission regime according to one embodiment. User equipment is operating in a standard 2ms TTI data transmission regime, and thus has a predetermined monitoring period set at the standard 16ms referred to above. Retransmission of any given data packet is scheduled to occur every 8 transmissions as necessary. In this standard scheme, a data packet of a predetermined size is tied to a particular Quality of Service having the following HARQ profile: maximum number of transmissions = 4, power offset 2dB. It can be calculated that the Quality of Service target time for successful transmission is 64ms (16ms x 4).

If user equipment fails to meet the Quality of Service target time for successful transmission, and the user equipment indicates to the base station that it is not able to transmit the data packets at a higher power due to power limitations, the base station sends a message to the user equipment modifying the data transmission regime.

In the embodiment shown, the base station indicates to the user equipment that it can reduce the simultaneous HARQ processes to 5. The base station also indicates to the user equipment that the power offset is now -1.5dB.

On receipt of this information from the base station, user equipment can then calculate the extended number of HARQ transmissions it can now make under the new data transmission regime.

In particular, the user equipment calculates the original Quality of Service target time for successful transmission. In this case, as described above, that time is 64ms (16ms x 4), or 32 TTI.

Since the number of simultaneous HARQ processes has been reduced by the base station to 5, the user equipment can also calculate that the monitoring period for receiving an ACK or NACK has been reduced to 5 x TTI, which in this case is 10ms.

The user equipment can then also calculate that under the new data transmission regime it is possible to fit in 6.4 transmissions to try to meet the same Quality of Service time for successful receipt. The number of allowed transmissions is reduced to the nearest whole number. In this example, the number of allowed transmissions is therefore 6.

The user equipment also acts to calculate a new overall power offset applicable to transmission on the dedicated data channel (E-DPDCH) carrying those data packets.

The modified power offset allows the overall power offset to be calculated for the modified data transmission regime as follows:
Overall power offset = original power offset + power offset in modified regime
0.5dB = 2dB - 1.5dB

The modified data transmission regime is shown schematically in Figure 4 as follows, by considering the transmission of a data packet TB1. TB1 is scheduled for transmission every 5 TTI. In the example illustrated, the user equipment received a NACK back from a base station in respect of the first 5 transmissions. The sixth transmission of TB1 is, however, successful and user equipment can then place a new data packet in the schedule in place of TB1. The total time taken to successfully transmit TB1 is, in this case, 30TTI (60ms) and is still within the target successful transmission time period required to maintain Quality of Service required prior to data transmission regime modification.

Figure 5 illustrates schematically a modification of a data transmission regime according to a second embodiment.

In this embodiment the base station processing is not sufficient to match a reduced number of simultaneous HARQ processes, i.e. the base station is unable to ACK or NACK receipt of a data packet before scheduled retransmission of that data packet by user equipment.

For simplicity, the user operates in standard 2ms TTI identically to the embodiment described in Figure 4. That is to say the HARQ profile of standard operation is: maximum number of transmissions = 4, power offset = 2dB. As calculated previously, the Quality of Service target time for successful transmission is 32TTI (64ms).

If user equipment fails to meet the Quality of Service target time for successful transmission, and the user equipment indicates to the base station that it is not able to transmit the data packets at a higher power due to power limitations, the base station sends a message to the user equipment modifying the data transmission regime.

In the embodiment shown, the base station indicates to the user equipment that it can reduce the simultaneous HARQ processes to 4. The base station also indicates to the user equipment that the power offset is now -3.0dB.

On receipt of this information from the base station, user equipment can then calculate the extended number of HARQ transmissions it can now make under the new data transmission regime.

In particular, the user equipment calculates the original Quality of Service target time for successful transmission. In this case, as described above, that time is 64ms (16ms x 4), or 32 TTI.

Since the number of simultaneous HARQ processes has been reduced by the base station to 4, the user equipment can also calculate that the monitoring period for receiving an ACK or NACK has been reduced to 4 x TTI, which in this case is 8ms.

The user equipment can then also calculate that under the new data transmission regime it is possible to fit in 8 transmissions to try to meet the same Quality of Service target time for successful receipt.

The user equipment also acts to calculate a new overall power offset applicable to transmission on the dedicated data channel (E-DPDCH) carrying those data packets.

The modified power offset allows the overall power offset to be calculated for the modified data transmission regime as follows:
Overall power offset = original power offset + power offset in modified regime
-1.0dB = 2dB - 3.0dB

In this embodiment, the base station is unable to complete a HARQ process for a data packet before that data packet is scheduled for retransmission by the user equipment. The base station is, however, capable of acknowledging alternate data packet transmissions.

The modified data transmission regime is shown schematically in Figure 5 in relation to transmission of a data packet TB 1. User equipment transmits data packet TB1 and waits for 3TTI's before scheduled retransmission of TB1. In the absence of any acknowledgement from the base station before scheduled retransmission, the user equipment assumes that TB1 was not received by the base station and retransmits TB1 as shown.

As shown in Figure 5, TB1 is retransmitted 7 times after first transmission. The data packet TB1 is successfully received by the base station on the 7th transmission (6th retransmission). Since the base station was unable to acknowledge safe receipt before the 8th transmission, user equipment transmits TB18 times. In this example, since the base station is operable to effectively acknowledge alternate data packet transmissions, at most only one additional unnecessary transmission occurs.

The total time taken to successfully transmit TB1 is, in this case, 32TTI (64ms) and still meets the target successful transmission time period required to maintain Quality of Service required prior to data transmission regime modification.

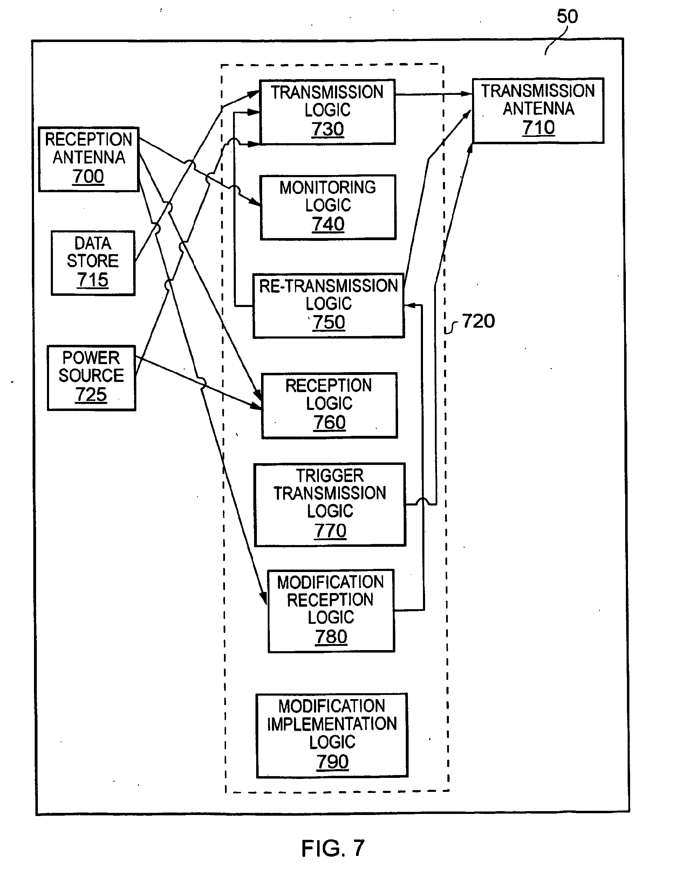

Figure 7 illustrates schematically user equipment operable to perform a method according to one embodiment. User equipment 50 comprises: a reception antenna 700, a transmission antenna 710, a data store 715, a power source 725 and a user equipment controller 720. The reception antenna 700 is operable to receive transmissions on a radio frequency carrier from a base station. Transmission antenna 710 is operable to transmit packets of data on a radio frequency carrier to a base station.

User equipment controller 720 further comprises: transmission logic 730 operable to transmit a data packet of a predetermined size, over a fixed transmit time interval, at a variable transmission power level to a base station 20; monitoring logic 740 operable to monitor for acknowledgement from the base station of successful receipt of the data packet; and retransmission logic 750 operable to retransmit said data packet if no acknowledgement of successful receipt has been received from a base station after a predetermined monitoring period has elapsed; reception logic 760 operable to receive details of said triggering event, said triggering event comprising receipt of a request to increase said variable transmission power level beyond a predetermined power threshold and said reception logic operable to receive signal from a base station and a power source to determine whether the trigger condition has been met; trigger transmission logic 770 operable to transmit trigger information relating to said triggering event; modification reception logic 780 operable to receive a modification signal generated in response to said triggering information, said modification signal instructing modification of said data transmission regime; and modification implementation logic

790 operable to modify said data packet transmission regime by decreasing said predetermined monitoring period in accordance with said received modification signal.

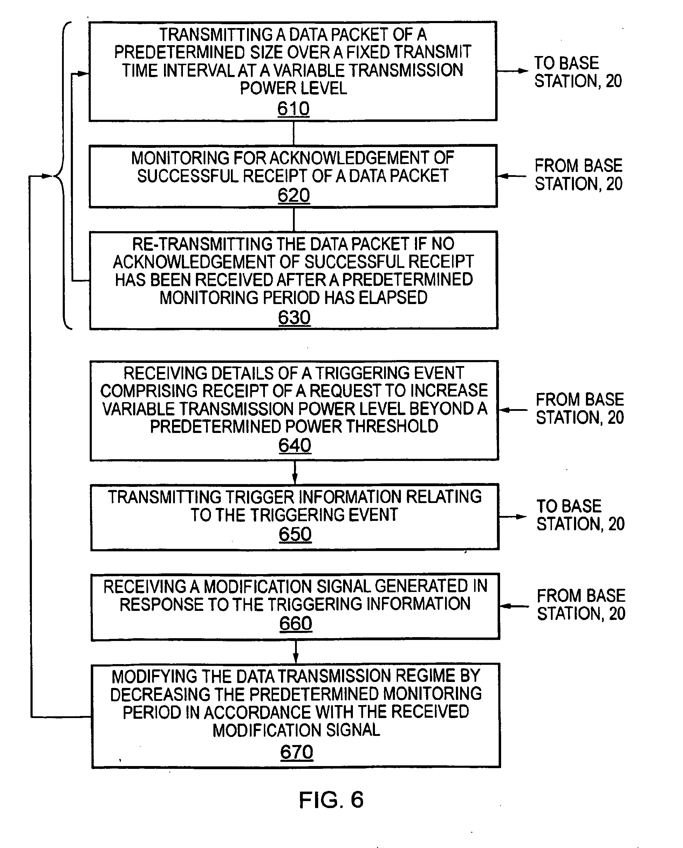

Figure 6 illustrates schematically the main processing steps of one embodiment. In the embodiment shown in Figure 6 user equipment as shown in Figure 7 is operable to perform the main processing steps. It will be understood that an analogous method may be employed by a base station operating in accordance with another embodiment. It will further be appreciated that the components shown schematically in the user equipment of Figure 7 may be employed in a base station in accordance with another embodiment.

Figure 6 shows the main steps of a data transmission regime: namely transmitting a data packet of a predetermined size, over a fixed transmit time interval, at a variable transmission power level (step 610); monitoring for acknowledgement of successful receipt of the data packet (step 620); and re-transmitting the data packet if no acknowledgement of successful receipt has been received after a predetermined monitoring period has elapsed (step 630).

To implement step 610 transmission logic 730 communicates with data store 715, power source 725 and transmission antenna 710, to send a packet of data to a base station. To implement step 620, monitoring logic 740 communicates with reception antenna 700, to monitor for an acknowledgement (ACK or NACK) from a base station. Monitoring logic waits for a predetermined monitoring period before communicating with re-transmission logic 750 to schedule re-transmission of the data packet (step 630) via transmission logic 730.

Figure 6 also illustrates the main processing steps associated with receiving details of a triggering event comprising receipt of a request to increase the variable transmission power level beyond a predetermined power threshold (step 640) and transmission of trigger information relating to the triggering event (step 650).

Implementation of step 640 is achieved by trigger reception logic 760 in conjunction with reception antenna 700 and power source 725. Base station 20 transmits a request to user equipment 50, asking it to increase power the data packet transmission signal. If reception logic 760 determines that request from the base station cannot be met by power source 725, step 650 is implemented by trigger transmission logic 770. Trigger transmission logic operates to transmit details of the trigger event to base station 20, via transmission antenna 710.

If a trigger notification is sent, user equipment receives a modification signal generated by the base station 20 in response to the triggering information (sep 660). The modification signal instructs modification of the data transmission regime (steps 610, 620 and 630) and the user equipment modifies the data packet transmission regime by decreasing the predetermined monitoring period in accordance with the received modification signal (step 670).

Implementation of step 660 is achieved by user equipment 50 by modification logic 780 which receives the modification sent to user equipment 50 and is received by reception antenna 700. That signal is interpreted and step 670 is achieved by modification implementation logic 790 in conjunction with re-transmission logic 750.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention.

## Claims

1. A method of modifying a data packet transmission regime in a wireless telecommunications network in response to a triggering event,
said data packet transmission regime comprising:
transmitting (610) a data packet of a predetermined size, over a fixed transmit time interval, at a variable transmission power level;
monitoring (620) for acknowledgement of successful receipt of said data packet; and
retransmitting (630) said data packet if no acknowledgement of successful receipt has been received after a predetermined monitoring period has elapsed,
receiving (640) details of said triggering event, said triggering event comprising receipt of a request to increase said variable transmission power level beyond a predetermined power threshold;
transmitting (650) trigger information indicating an occurrence of said triggering event;
receiving (660) a modification signal instructing a decrease in said predetermined monitoring period of said data transmission regime, said modification signal being generated in response to said triggering information; and
modifying (670) said data packet transmission regime by decreasing said predetermined monitoring period in accordance with said received modification signal.

2. A method of modifying a data packet transmission regime according to claim 1, further comprising the step of:
decreasing said transmission power level of said data transmission regime in accordance with said received modification signal.

3. A method of modifying a data packet transmission regime according to claim 1 or claim 2, wherein said modifying (670) step further comprises the steps of:
determining for the unmodified data transmission regime, an unmodified power offset;
determining from said modification signal, a modified power offset; and
generating a new overall power offset by summing said unmodified power offset and said modified power offset.

4. A method of modifying a data packet transmission regime according to any preceding claim, wherein said modifying (670) step further comprises the steps of:
determining for the unmodified data transmission regime, a target number of total transmissions of said data packet;
generating a target elapsed time period for said data packet to be successfully received after first transmission of said data packet, by multiplying said target number of total transmission by said unmodified predetermined monitoring period;
calculating a target number of total transmissions in the modified regime that will fit into said generated target elapsed time by dividing said generated target elapsed time by said modified reduced predetermined monitoring period.

5. A method of modifying a data packet transmission regime according to any preceding claim, wherein said data transmission regime further comprises the steps of:
monitoring for acknowledgement of partial receipt of said data packet; and
retransmitting a modified version of said data packet in response to said acknowledgement of partial receipt of said data packet.

6. A method of modifying (670) a data packet transmission regime according to any preceding claim, wherein said modification signal generated in response to said triggering information comprises an indication of a number of supportable simultaneous acknowledgement processes; and
said modifying step further comprises a step of calculating a modified predetermined monitoring period by multiplying said indication of a number of supportable simultaneous acknowledgement processes by said fixed transmit time interval; and
modifying said data packet transmission regime by setting said predetermined monitoring period in accordance with said calculated modified predetermined monitoring period.

7. A method of modifying a data packet transmission regime according to any preceding claim, wherein said fixed transmit time interval is 2ms or 10ms.

8. A method of modifying a data packet transmission regime according to any preceding claim, wherein said unmodified predetermined monitoring period is 16ms or 40ms.

9. A method according to any preceding claim, wherein said data packet transmission regime comprises a regime for transmitting data packets from user equipment (50) to a base station (20).

10. A method according to claim 9, wherein said step of transmitting (650) trigger information relating to said triggering event comprises a step of transmitting trigger information to the base station (20), and wherein said step of receiving (660) a modification signal generated in response to said triggering information comprises a step of receiving said modification signal from said base station (20).

11. A computer program product, operable when executed on a computer, to perform the method steps of any of claims 1 to 10.

12. User equipment (50) operable to modify a data packet transmission regime for a wireless telecommunications network in response to a triggering event, said user equipment comprising:
transmission logic (730) operable to transmit a data packet of a predetermined size, over a fixed transmit time interval, at a variable transmission power level;
monitoring logic (740)operable to monitor for acknowledgement of successful receipt of said data packet; and
retransmission logic (750) operable to retransmit said data packet if no acknowledgement of successful receipt has been received after a predetermined monitoring period has elapsed,
reception logic (760) operable to receive details of said triggering event, said triggering event comprising receipt of a request to increase said variable transmission power level beyond a predetermined power threshold; trigger transmission logic (770) operable to transmit trigger information indicating an occurrence of said triggering event;
modification reception logic (780) operable to receive a modification signal instructing a decrease in said predetermined monitoring period of said data transmission regime, said modification signal being generated in response to said triggering information; and
modification logic (780, 790)operable to modify said data packet transmission regime by decreasing said predetermined monitoring period in accordance with said received modification signal.

13. A base station (20) operable to modify a data packet transmission regime for a wireless telecommunications network in response to a triggering event, said base station comprising:
transmission logic operable to transmit a data packet of a predetermined size, over a fixed transmit time interval, at a variable transmission power level;
monitoring logic operable to monitor for acknowledgement of successful receipt of said data packet; and
retransmission logic operable to retransmit said data packet if no acknowledgement of successful receipt has been received after a predetermined monitoring period has elapsed,
reception logic operable to receive details of said triggering event, said triggering event comprising receipt of a request to increase said variable transmission power level beyond a predetermined power threshold;
trigger transmission logic operable to transmit trigger information indicating an occurrence of said triggering event;
modification reception logic operable to receive a modification signal instructing a decrease in said predetermined monitoring period of said data transmission regime, said modification signal being generated in response to said triggering information; and
modification logic operable to modify said data packet transmission regime by decreasing said predetermined monitoring period in accordance with said received modification signal.

## Patentansprüche

1. Verfahren zur Modifizierung eines Datenpaketübertragungsregimes in einem drahtlosen Telekommunikationsnetzwerk in Reaktion auf ein Triggerereignis,
wobei das besagte Datenpaketübertragungsregime umfasst:
Übertragung (610) eines Datenpakets einer vorbestimmten Größe über ein festgelegtes Übertragungszeitintervall mit einem variablen Übertragungsleistungspegel;
Überwachung (620) auf eine Bestätigung des erfolgreichen Empfangs des besagten Datenpakets; und
Erneute Übertragung (630) des besagten Datenpakets, wenn nach Ablauf eines vorbestimmten Überwachungszeitraums keine Bestätigung des erfolgreichen Empfangs empfangen wurde,
Empfang (640) von näheren Angaben über das besagte Triggerereignis, wobei das besagte Triggerereignis den Empfang einer Anforderung für eine Erhöhung des besagten variablen Übertragungsleistungspegels über eine vorbestimmte Leistungsgrenze hinaus umfasst;
Übertragung (650) von Triggerinformationen, welche ein Auftreten des besagten Triggerereignisses anzeigen;
Empfang (660) eines Modifikationssignals, welches eine Verringerung des besagten vorbestimmten Überwachungszeitraums des besagten Datenpaketübertragungsregimes anordnet, wobei das besagte Modifikationssignal in Reaktion auf die besagten Triggerinformationen erzeugt wird; und
Modifizierung (670) des besagten Datenpaketübertragungsregimes durch Verringern des besagten vorbestimmten Überwachungszeitraums gemäß dem besagten empfangenen Modifikationssignal.

2. Verfahren zur Modifizierung eines Datenpaketübertragungsregimes gemäß Anspruch 1, weiterhin den folgenden Schritt umfassend:
Senken des besagten Übertragungsleistungspegels des besagten Datenübertragungsregimes gemäß dem besagten empfangenen Modifikationssignal.

3. Verfahren zur Modifizierung eines Datenpaketübertragungsregimes nach Anspruch 1 oder Anspruch 2, wobei der besagte Schritt des Modifizierens (670) weiterhin die folgenden Schritte umfasst:
Ermitteln, für das unveränderte Datenübertragungsregime, eines unveränderten Leistungs-Offsets;
Ermitteln, aus dem besagten Modifikationssignal, eines geänderten Leistungs-Offsets; und
Erzeugen eines neuen Gesamtleistungs-Offsets durch Addieren des besagten unveränderten Leistungs-Offsets und des besagten geänderten Leistungs-Offsets.

4. Verfahren zur Modifizierung eines Datenpaketübertragungsregimes nach einem beliebigen der vorstehenden Ansprüche, wobei der Schritt des Modifizierens (670) weiterhin die folgenden Schritte umfasst:
Bestimmen, für das unveränderte Datenübertragungsregime, einer Ziel-Anzahl von Gesamtübertragungen des besagten Datenpakets;
Erzeugen eines Ziel-Ablaufzeitraums für das besagte Datenpaket, um nach einer ersten Übertragung des besagten Datenpakets erfolgreich empfangen zu werden, durch Multiplizieren der besagten Ziel-Anzahl von Gesamtübertragungen mit dem besagten unveränderten vorbestimmten Überwachungszeitraum;
Berechnen einer Ziel-Anzahl von Gesamtübertragungen in dem geänderten Regime, welche in den besagten erzeugten Ziel-Ablaufzeitraum passt, durch Dividieren des besagten erzeugten Ziel-Ablaufzeitraums durch den besagten geänderten verringerten vorbestimmten Überwachungszeitraum.

5. Verfahren zur Modifizierung eines Datenpaketübertragungsregimes nach einem beliebigen der vorstehenden Ansprüche, wobei das besagte Datenpaketübertragungsregime weiterhin die folgenden Schritte umfasst:
Überwachen auf die Bestätigung des teilweisen Empfangs des besagten Datenpakets; und
erneutes Übertragen einer geänderten Version des besagten Datenpakets in Reaktion auf die besagte Bestätigung des teilweisen Empfangs des besagten Datenpakets.

6. Verfahren zur Modifizierung (670) eines Datenpaketübertragungsregimes nach einem beliebigen der vorstehenden Ansprüche, wobei das besagte in Reaktion auf die besagten Triggerinformationen erzeugte Modifikationssignal eine Angabe über eine Anzahl von tragbaren simultanen Bestätigungsprozessen umfasst; und
wobei der besagte Schritt des Modifizierens weiterhin einen Schritt des Berechnens eines geänderten vorbestimmten Überwachungszeitraums durch Multiplizieren der besagten Angabe über eine Anzahl von tragbaren simultanen Bestätigungsprozessen mit dem besagten festgelegten Übertragungszeitintervall umfasst; und
Modifizieren des besagten Datenpaketübertragungsregimes durch Einstellen des besagten vorbestimmten Überwachungszeitraums gemäß dem besagten berechneten geänderten vorbestimmten Überwachungszeitraum.

7. Verfahren zur Modifizierung eines Datenpaketübertragungsregimes nach einem beliebigen der vorstehenden Ansprüche, wobei das besagte festgelegte Übertragungszeitintervall 2ms oder 10ms beträgt.

8. Verfahren zur Modifizierung eines Datenpaketübertragungsregimes nach einem beliebigen der vorstehenden Ansprüche, wobei der besagte unveränderte vorbestimmte Überwachungszeitraum 16ms oder 40ms beträgt.

9. Verfahren nach einem beliebigen der vorstehenden Ansprüche, wobei das besagte Datenpaketübertragungsregime ein Regime für die Übertragung von Datenpaketen von einem Benutzerendgerät (50) an eine Basisstation (20) umfasst.

10. Verfahren nach Anspruch 9, wobei der besagte Schritt des Übertragens (650) von Triggerinformationen in Bezug auf das besagte Triggerereignis einen Schritt des Übertragens von Triggerinformationen an die Basisstation (20) umfasst, und wobei der besagte Schritt des Empfangens (660) eines in Reaktion auf die besagten Triggerinformationen erzeugten Modifikationssignals einen Schritt des Empfangens des besagten Modifikationssignals von der besagten Basisstation (20) umfasst.

11. Computerprogramm-Produkt, bei Ausführung auf einem Computer betreibbar, um die Verfahrensschritte gemäß den Ansprüchen 1 bis 10 durchzuführen.

12. Benutzerendgerät (50), betreibbar, um ein Datenpaketübertragungsregime für ein drahtloses Telekommunikationsnetzwerk in Reaktion auf ein Triggerereignis zu modifizieren, wobei das besagte Benutzerendgerät umfasst:
Übertragungslogik (730), betreibbar für die Übertragung eines Datenpakets einer vorbestimmten Größe über ein festgelegtes Übertragungszeitintervall mit einem variablen Übertragungsleistungspegel;
Überwachungslogik (740), betreibbar für die Überwachung auf eine Bestätigung des erfolgreichen Empfangs des besagten Datenpakets; und
Erneute Übertragungslogik (750), betreibbar für die erneute Übertragung des besagten Datenpakets, wenn nach Ablauf eines vorbestimmten Überwachungszeitraums keine Bestätigung des erfolgreichen Empfangs empfangen wurde,
Empfangslogik (760), betreibbar für den Empfang von näheren Angaben über das besagte Triggerereignis, wobei das besagte Triggerereignis den Empfang einer Anforderung für eine Erhöhung des besagten variablen Übertragungsleistungspegels über eine vorbestimmte Leistungsgrenze hinaus umfasst;
Triggerübertragungslogik (770), betreibbar für die Übertragung von Triggerinformationen, welche ein Auftreten des besagten Triggerereignisses anzeigen;
Modifikationsempfangslogik (780), betreibbar für den Empfang eines Modifikationssignals, welches eine Verringerung des besagten vorbestimmten Überwachungszeitraums des besagten Datenübertragungsregimes anordnet, wobei das besagte Modifikationssignal in Reaktion auf die besagten Triggerinformationen erzeugt wird; und
Modifikationslogik (780, 790), betreibbar für die Modifizierung des besagten Datenpaketübertragungsregimes durch Verringern des besagten vorbestimmten Überwachungszeitraums gemäß dem besagten empfangenen Modifikationssignal.

13. Basisstation (20), betreibbar, um Datenpaketübertragungsregime für ein drahtloses Telekommunikationsnetzwerk in Reaktion auf ein Triggerereignis zu modifizieren, wobei die besagte Basisstation umfasst:
Übertragungslogik, betreibbar für die Übertragung eines Datenpakets einer vorbestimmten Größe über ein festgelegtes Übertragungszeitintervall mit einem variablen Übertragungsleistungspegel;
Überwachungslogik, betreibbar für die Überwachung auf eine Bestätigung des erfolgreichen Empfangs des besagten Datenpakets; und
Erneute Übertragungslogik, betreibbar für die erneute Übertragung des besagten Datenpakets, wenn nach Ablauf eines vorbestimmten Überwachungszeitraums keine Bestätigung des erfolgreichen Empfangs empfangen wurde,
Empfangslogik, betreibbar für den Empfang von näheren Angaben über das besagte Triggerereignis, wobei das besagte Triggerereignis den Empfang einer Anforderung für eine Erhöhung des besagten variablen Übertragungsleistungspegels über eine vorbestimmte Leistungsgrenze hinaus umfasst;
Triggerübertragungslogik, betreibbar für die Übertragung von Triggerinformationen, welche ein Auftreten des besagten Triggerereignisses anzeigen;
Modifikationsempfangslogik, betreibbar für den Empfang eines Modifikationssignals, welches eine Verringerung des besagten vorbestimmten Überwachungszeitraums des besagten Datenübertragungsregimes anordnet, wobei das besagte Modifikationssignal in Reaktion auf die besagten Triggerinformationen erzeugt wird; und
Modifikationslogik, betreibbar für die Modifizierung des besagten Datenpaketübertragungsregimes durch Verringern des besagten vorbestimmten Überwachungszeitraums gemäß dem besagten empfangenen Modifikationssignal.

## Revendications

1. Procédé de modification d'un régime de transmission de paquets de données dans un réseau de télécommunication sans fil en réponse à un événement déclencheur,
ledit régime de transmission de paquets de données comprenant les étapes suivantes :
transmettre (610) un paquet de données d'une taille prédéterminée, pendant un intervalle de temps de transmission fixe, à un niveau de puissance de transmission variable ;
surveiller (620) l'accusé de bonne réception dudit paquet de données ; et
retransmettre (630) ledit paquet de données si aucun accusé de bonne réception n'a été reçu après qu'une période de surveillance prédéterminée s'est écoulée,
recevoir (640) des détails dudit événement déclencheur, ledit évènement déclencheur comprenant la réception d'une requête pour augmenter ledit niveau de puissance de transmission variable au-delà d'un seuil de puissance prédéterminé ;
transmettre (650) des informations de déclenchement indiquant une occurrence dudit événement déclencheur;
recevoir (660) un signal de modification ordonnant une diminution de ladite période de surveillance prédéterminée dudit régime de transmission de données, ledit signal de modification étant généré en réponse auxdites informations de déclenchement ; et
modifier (670) ledit régime de transmission de paquets de données en diminuant ladite période de surveillance prédéterminée conformément audit signal de modification reçu.

2. Procédé de modification d'un régime de transmission de paquets de données selon la revendication 1, comprenant en outre l'étape suivante :
diminuer ledit niveau de puissance de transmission dudit régime de transmission de données conformément audit signal de modification reçu.

3. Procédé de modification d'un régime de transmission de paquets de données selon la revendication 1 ou la revendication 2, dans lequel ladite étape de modification (670) comprend en outre les étapes suivantes :
déterminer pour le régime de transmission de données non modifié, un décalage de puissance non modifié ;
déterminer à partir dudit signal de modification, un décalage de puissance modifié ; et
générer un nouveau décalage de puissance global en additionnant ledit décalage de puissance non modifié et ledit décalage de puissance modifié.

4. Procédé de modification d'un régime de transmission de paquets de données selon l'une quelconque des revendications précédentes, dans lequel ladite étape de modification (670) comprend en outre les étapes suivantes :
déterminer pour le régime de transmission de données non modifié, un nombre cible de transmissions totales dudit paquet de données ;
générer une période écoulée cible pour ledit paquet de données devant être reçu avec succès après une première transmission dudit paquet de données, en multipliant ledit nombre cible de transmission totale par ladite période de surveillance prédéterminée non modifiée ;
calculer un nombre cible de transmissions totales dans le régime modifié qui s'adaptent audit temps écoulé cible généré en divisant ledit temps écoulé cible généré par ladite période de surveillance prédéterminée réduite modifiée.

5. Procédé de modification d'un régime de transmission de paquets de données selon l'une quelconque des revendications précédentes, dans lequel ledit régime de transmission de données comprend en outre les étapes suivantes :
surveiller l'accusé de réception partielle dudit paquet de données ; et
retransmettre une version modifiée dudit paquet de données en réponse audit accusé de réception partielle dudit paquet de données.

6. Procédé de modification (670) d'un régime de transmission de paquets de données selon l'une quelconque des revendications précédentes, dans lequel ledit signal de modification généré en réponse auxdites informations de déclenchement comprend une indication d'un certain nombre de processus d'accusé de réception simultanés pouvant être pris en charge ; et
ladite étape de modification comprend en outre une étape de calcul d'une période de surveillance prédéterminée modifiée en multipliant ladite indication d'un certain nombre de processus d'accusé de réception simultanés pouvant être pris en charge par ledit intervalle de temps de transmission fixe ; et
modifier ledit régime de transmission de paquets de données en définissant ladite période de surveillance prédéterminée en fonction de ladite période de surveillance prédéterminée modifiée calculée.

7. Procédé de modification d'un régime de transmission de paquets de données selon l'une quelconque des revendications précédentes, dans lequel ledit intervalle de temps de transmission fixe est de 2 ms ou de 10 ms.

8. Procédé de modification d'un régime de transmission de paquets de données selon l'une quelconque des revendications précédentes, dans lequel ladite période de surveillance prédéterminée non modifiée est de 16 ms ou de 40 ms.

9. Procédé selon l'une quelconque des revendications précédentes, dans lequel ledit régime de transmission de paquets de données comprend un régime pour transmettre des paquets de données depuis un équipement utilisateur (50) vers une station de base (20).

10. Procédé selon la revendication 9, dans lequel ladite étape de transmission (650) d'informations de déclenchement relatives audit événement déclencheur comprend une étape de transmission d'informations de déclenchement à la station de base (20), et dans lequel ladite étape de réception (660) d'un signal de modification généré en réponse auxdites informations de déclenchement comprend une étape de réception dudit signal de modification à partir de ladite station de base (20).

11. Produit de programme informatique permettant, lorsqu'il est exécuté sur un ordinateur, d'exécuter les étapes du procédé selon l'une quelconque des revendications 1 à 10.

12. Équipement utilisateur (50) permettant de modifier un régime de transmission de paquets de données pour un réseau de télécommunication sans fil en réponse à un événement déclencheur, ledit équipement utilisateur comprenant :
une logique de transmission (730) permettant de transmettre un paquet de données d'une taille prédéterminée, pendant un intervalle de temps de transmission fixe, à un niveau de puissance de transmission variable ;
une logique de surveillance (740) permettant de surveiller l'accusé de bonne réception dudit paquet de données ; et
une logique de retransmission (750) permettant de retransmettre ledit paquet de données si aucun accusé de bonne réception n'a été reçu après qu'une période de surveillance prédéterminée s'est écoulée,
une logique de réception (760) permettant de recevoir des détails dudit évènement déclencheur, ledit événement déclencheur comprenant la réception d'une requête pour augmenter ledit niveau de puissance de transmission variable au-delà d'un seuil de puissance prédéterminé ;
une logique de transmission de déclenchement (770) permettant de transmettre des informations de déclenchement indiquant une occurrence dudit événement de déclenchement ;
une logique de réception de modification (780) permettant de recevoir un signal de modification ordonnant une diminution de ladite période de surveillance prédéterminée dudit régime de transmission de données, ledit signal de modification étant généré en réponse auxdites informations de déclenchement ; et
une logique de modification (780, 790) permettant de modifier ledit régime de transmission de paquets de données en diminuant ladite période de surveillance prédéterminée conformément audit signal de modification reçu.

13. Station de base (20) permettant de modifier un régime de transmission de paquets de données pour un réseau de télécommunication sans fil en réponse à un évènement déclencheur, ladite station de base comprenant :
une logique de transmission permettant de transmettre un paquet de données d'une taille prédéterminée, pendant un intervalle de temps de transmission fixe, à un niveau de puissance de transmission variable ;
une logique de surveillance permettant de surveiller l'accusé de bonne réception dudit paquet de données ; et
une logique de retransmission permettant de retransmettre ledit paquet de données si aucun accusé de bonne réception n'a été reçu après qu'une période de surveillance prédéterminée s'est écoulée,
une logique de réception permettant de recevoir des détails dudit évènement déclencheur, ledit événement déclencheur comprenant la réception d'une requête pour augmenter ledit niveau de puissance de transmission variable au-delà d'un seuil de puissance prédéterminé ;
une logique de transmission de déclenchement permettant de transmettre des informations de déclenchement indiquant une occurrence dudit événement de déclenchement ;
une logique de réception de modification permettant de recevoir un signal de modification ordonnant une diminution de ladite période de surveillance prédéterminée dudit régime de transmission de données, ledit signal de modification étant généré en réponse auxdites informations de déclenchement ; et
une logique de modification permettant de modifier ledit régime de transmission de paquets de données en diminuant ladite période de surveillance prédéterminée conformément audit signal de modification reçu.
